# EUROPEAN PATENT APPLICATION

(11) **EP 4 036 160 A2**
(43) Date of publication of application: **03.08.2022**
(21) Application number: 21193708.1
(22) Date of filing: 30.08.2021
(51) Int. Cl.: C08J 5/18

(54) **MATTE POLYESTER FILM AND METHOD FOR MANUFACTURING THE SAME**

(30) Priority: 29.01.2021 TW 110103383
(71) Applicant: NAN YA PLASTICS CORPORATION, Taipei (TW)
(72) Inventor: YANG, Wen-Cheng, Taipei (TW); LIAO, Te-Chao, Taipei (TW); YANG, Chun-Cheng, Taipei (TW); HSIAO, Chia-Yen, Taipei (TW); CHEN, Hao-Sheng, Taipei (TW)
(74) Representative: Becker, Eberhard

(57) **Abstract**

A matte polyester film and a method for manufacturing the same are provided. The method for manufacturing the matte polyester film includes: providing a recycled polyester material; physically regenerating a part of the recycled polyester material to form physically regenerated polyester chips having a first intrinsic viscosity; chemically regenerating another part of the recycled polyester material to form chemically regenerated polyester chips having a second intrinsic viscosity less than the first intrinsic viscosity; mixing matte regenerated polyester chips, the physically regenerated polyester chips, and the chemically regenerated polyester chips according to a predetermined intrinsic viscosity so as to form a polyester masterbatch material; melting and then extruding the polyester masterbatch material to obtain the matte polyester film having the predetermined intrinsic viscosity.

## Description

### BACKGROUND

### Technical Field

The disclosure relates to a matte polyester film and a method for manufacturing the same, in particular to a matte polyester film prepared by using both a physically regenerated polyester resin and a chemically regenerated polyester resin and a method for manufacturing the same.

### Description of Related Art

In the prior art, the most common recycling method for waste PET bottles is the physical recycling method (or mechanical recycling method). The physical recycling method is mainly to pulverize the waste PET bottle materials by a physical mechanical means; then placing the pulverized PET bottle materials in a high-temperature environment for melting; then pelletizing the molten PET bottle materials to form physically regenerated polyester chips. The physically regenerated polyester chips may be used in subsequent processing operations.

The physically regenerated polyester chips produced by the physical recycling method usually have higher intrinsic viscosity (IV). To adjust the intrinsic viscosity of the physically regenerated polyester chips, is mainly used solid-state polymerization. However, the solid-state polymerization method may only be used to increase the intrinsic viscosity of the physically regenerated polyester chips, and may not be used to reduce the intrinsic viscosity of the physically regenerated polyester chips. In addition, the general film-making process usually has certain limitations on the intrinsic viscosity range of polyester chips. The physically regenerated polyester chips produced by the physical recycling method are generally only suitable for bottle blowing and spinning processes, and not suitable for film extrusion.

To make the physically regenerated polyester chips suitable for a film-making process is mainly mixed the physically regenerated polyester chips and additional virgin polyester chips to reduce the overall intrinsic viscosity of the polyester materials. However, this method may be not able to effectively increase the proportion of recycled polyester materials in the matte polyester film, and therefore the final matte polyester film product may not meet the demands of environmental protection. In other words, there may be a certain limit in the proportion of recycled polyester in the current matte polyester film that needs to be overcome.

### SUMMARY

The disclosure is to provide a matte polyester film and a method for manufacturing the same to overcome the shortcomings of the technology.

The disclosure is to provide a method for manufacturing a matte polyester film. The method for manufacturing a matte polyester film includes the following steps: providing a recycled polyester material; physically regenerating a part of the recycled polyester material to form physically regenerated polyester chips; wherein the physically regenerated polyester chips have a first intrinsic viscosity; chemically regenerating another part of the recycled polyester material to form chemically regenerated polyester chips; wherein the chemically regenerated polyester chips have a second intrinsic viscosity less than the first intrinsic viscosity; mixing matte regenerated polyester chips, the physically regenerated polyester chips, and the chemically regenerated polyester chips according to a predetermined intrinsic viscosity so as to form a polyester masterbatch material; and melting and then extruding the polyester masterbatch material to obtain the matte polyester film having the predetermined intrinsic viscosity; the predetermined intrinsic viscosity of the matte polyester film is between 0.40 dL/g and 0.75 dL/g; the matte polyester film has an acid value between 10 mgKOH/g and 80 mgKOH/g; the matte polyester film has a surface roughness (Ra) between 100 nm and 400 nm; and the matte polyester film has a friction coefficient between 0.2 and 0.6.

The disclosure is to provide a matte polyester film. The matte polyester film is formed by mixing, melting, and extruding a physically regenerated polyester resin and a chemically regenerated polyester resin according to a predetermined intrinsic viscosity, so that the matte polyester film has the predetermined intrinsic viscosity. The predetermined intrinsic viscosity of the matte polyester film is between 0.40 dL/g and 0.75 dL/g; the matte polyester film has an acid value between 10 mgKOH/g and 80 mgKOH/g; the matte polyester film has a surface roughness (Ra) between 100 nm and 400 nm; and the matte polyester film has a friction coefficient between 0.2 and 0.6.

In some embodiments, based on a total weight of 100 mol% of the matte polyester film, a content of isophthalic acid in the matte polyester film is between 0.7 mol% and 4.0 mol%; and a storage modulus of the matte polyester film measured at 150±2 °C and 10 Hz is between 4.2×10⁹ dyne/cm² and 6.8×10⁹ dyne/cm².

In some embodiments, the matte polyester film has a haze between 15% and 95%, and the matte polyester film has a visible light transmittance not less than 60%.

In some embodiments, based on a total weight of 100 wt% of the matte polyester film, a content of biomass-derived ethylene glycol in the matte polyester film is not more than 5 wt%.

In order to solve the above technical issue, one of the technical solutions adopted in the disclosure is to provide a matte polyester film. The matte polyester film has a predetermined intrinsic viscosity between 0.40 dL/g and 0.75 dL/g; the matte polyester film has an acid value between 10 mgKOH/g and 80 mgKOH/g; the matte polyester film has a surface roughness (Ra) between 100 nm and 400 nm; and the matte polyester film has a friction coefficient between 0.2 and 0.6.

In some embodiments, based on a total weight of 100 mol% of the matte polyester film, a content of isophthalic acid in the matte polyester film is between 0.7 mol% and 4.0 mol%; and a storage modulus of the matte polyester film measured at 150±2 °C and 10 Hz is between 4.2×10⁹ dyne/cm² and 6.8×10⁹ dyne/cm².

In some embodiments, the matte polyester film has a haze between 15% and 95%, and the matte polyester film has a visible light transmittance not less than 60%.

In some embodiments, based on a total weight of 100 wt% of the matte polyester film, a content of biomass-derived ethylene glycol in the matte polyester film is not more than 5 wt%.

One of the beneficial effects of the disclosure is that for the matte polyester film and the method for manufacturing the same provided by the disclosure, via the technical solution of "mixing matte regenerated polyester chips, the physically regenerated polyester chips, and the chemically regenerated polyester chips according to a predetermined intrinsic viscosity to form a polyester masterbatch material", the polyester masterbatch material may be adjusted to have a predetermined intrinsic viscosity, so as to be suitable for a film extrusion process, and a higher proportion of the recycled polyester masterbatch material is achieved.

In order to further understand the features and technical content of the disclosure, please refer to the following detailed description and figures of the disclosure. However, the provided figures are only used for reference and description, and are not used to limit the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG.1 is a schematic flowchart of a method for manufacturing a matte polyester film of the disclosure.
FIG. 2 is a schematic diagram of the molecular weight distribution of a polyester masterbatch material of the disclosure.
FIG. 3 is a test result of the storage modulus of a matte polyester film according to an embodiment of the disclosure (test conditions: the film thickness is 50 microns, and the test direction is the MD direction).
FIG. 4 is a test result of the storage modulus of a matte polyester film according to an embodiment of the disclosure (test conditions: the film thickness is 50 microns, and the test direction is the TD direction).

### DESCRIPTION OF THE EMBODIMENTS

The following are specific embodiments to illustrate the implementation of the "matte polyester film and a method for manufacturing the same" disclosed in the disclosure. Those skilled in the art may understand the advantages and effects of the disclosure from the content disclosed in this specification. The disclosure may be implemented or applied via other different specific embodiments, and various details in this specification may also be modified and changed based on different viewpoints and applications without departing from the concept of the disclosure. In addition, the figures of the disclosure are merely schematic illustrations, and are not drawn according to actual size. The following embodiments further describe the related technical content of the disclosure in detail, but the disclosed content is not intended to limit the scope of the disclosure. In addition, the term "or" used in this specification may include any one or a combination of a plurality of the associated listed items depending on the actual situation.

### [Method for manufacturing matte polyester film]

One of the objects of the disclosure is to increase the proportion of recycled polyester materials in the matte polyester film, so that the matte polyester film product may meet the demands of environmental protection.

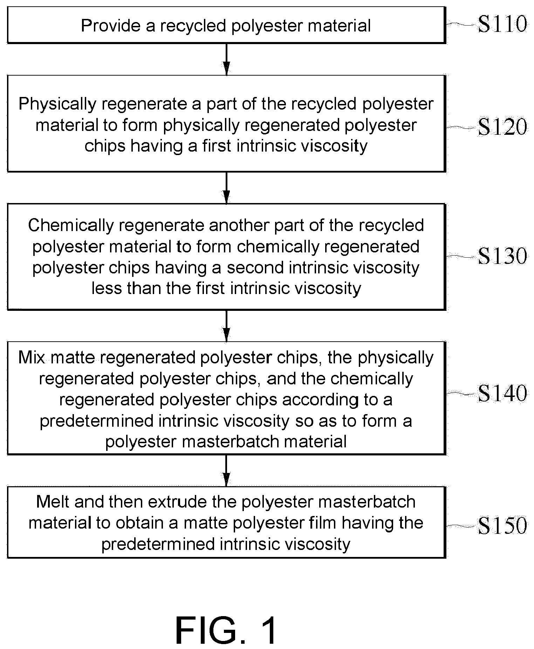

In order to achieve the above object, please refer to FIG. 1. According to an embodiment of the disclosure, a method for manufacturing a matte polyester film is provided to effectively increase the proportion of recycled polyester material in the matte polyester film, and to provide the resulting matte polyester film with good processability. The method for manufacturing the matte polyester film includes step S110 to step S150. It must be noted that the sequence of the steps and the actual operation method described in the present embodiment may be adjusted as needed, and are not limited to those described in the present embodiment.

Step S110 includes: providing a recycled polyester material.

In order to obtain reusable recycled polyester materials, the recycling method of polyester materials includes: collecting various types of waste polyester materials; classifying according to the types, colors, and uses of the waste polyester materials. Then, the waste polyester materials are compressed and packaged. Then, the packaged waste polyester materials are transported to a waste treatment plant. In the present embodiment, the waste polyester materials are recycled PET bottles (r-PET), but the disclosure is not limited thereto.

The recycling method of polyester materials further includes: removing other objects (such as bottle caps, labels, and adhesives) on the waste polyester materials. Then, the waste polyester materials are pulverized by a physical mechanical means. Then, the bottle mouth, liner, and bottle body of different materials are separated by flotation. Then, the pulverized waste polyester materials are dried to obtain processed recycled polyester materials, such as recycled PET bottles (r-PET) bottle flakes, to facilitate the subsequent thin-film manufacturing process.

It is worth mentioning that, in other modified embodiments of the disclosure, the recycled polyester materials may also be, for example, directly purchased processed recycled polyester materials.

It should be mentioned that, the terms "polyester", "polyester material", etc. herein refer to any type of polyester, especially aromatic polyester, and here in particular refers to the polyester derived from the copolymerization of terephthalic acid and ethylene glycol, namely polyethylene terephthalate (PET).

Moreover, the polyester may also be, for example, polytrimethylene terephthalate (PTT), polybutylene terephthalate (PBT), or polyethylene naphthalate (PEN). In the present embodiment, the polyester is preferably polyethylene terephthalate and polytrimethylene terephthalate. Moreover, copolymers may also be used, particularly copolymers obtainable by using two or more dicarboxylic acids and/or two or more diol components.

In an embodiment of the disclosure, the r-PET bottle flakes contain isophthalic acid (IPA) as a diacid unit. Therefore, the final matte polyester film also contains isophthalic acid. In particular, based on a total weight of 100 mol% of the matte polyester film, the content of isophthalic acid in the matte polyester film is between 0.5 mol% and 5 mol%.

In an embodiment of the disclosure, the r-PET bottle flakes contain biomass-derived ethylene glycol as the diol unit. Therefore, the final matte polyester film also contains the biomass-derived ethylene glycol. In particular, based on a total weight of 100 wt% of the matte polyester film, the content of the biomass-derived ethylene glycol in the matte polyester film is not more than 5 wt%. Moreover, based on all the carbon in the matte polyester film, the content of carbon derived from biomass measured by radioactive elements (C¹⁴) is not more than 5%.

In an embodiment of the disclosure, the r-PET bottle flakes contain a metal catalyst, so that the final matte polyester film also contains the metal catalyst. In particular, the metal catalyst is at least one selected from the group consisting of antimony (Sb), germanium (Ge), and titanium (Ti). Based on a total weight of 100 wt% of the matte polyester film, the content of the metal catalyst in the matte polyester film is 0.0003 wt% to 0.04 wt%.

Step S120 includes: physically regenerating a part of the recycled polyester material to obtain physically regenerated polyester chips. The physically regenerated polyester chips have a first intrinsic viscosity. In the present embodiment, the first intrinsic viscosity of the physically regenerated polyester chips is generally not less than 0.60 dL/g. Preferably, the first intrinsic viscosity is 0.65 dL/g to 0.90 dL/g. More preferably, the first intrinsic viscosity is 0.65 dL/g to 0.80 dL/g.

Specifically, the manufacturing steps of the physically regenerated polyester chips include: pulverizing a part of the recycled polyester material (such as r-PET bottle flakes) by a physical mechanical means to reduce the time and energy consumption required to melt the recycled polyester material. Then, the pulverized recycled polyester material is melted, so that the recycled polyester material is in a molten state. Then, a first screen is used to filter the recycled polyester material in the molten state to remove solid impurities in the recycled polyester material. Lastly, the filtered recycled polyester material is extruded and pelletized to form the physically regenerated polyester chips.

In other words, the recycled polyester material is reshaped by cutting, melting, filtering, extruding, and the like in sequence in order to rearrange the polyester molecules in the original recycled polyester material, so as to prepare a plurality of the physically regenerated polyester chips.

It should be mentioned that since in the physical regenerating process, the polyester molecules of the recycled polyester material are only rearranged but not reorganized, the components (such as metal catalysts, slipping agents, or copolymerized monomers, etc.) originally present in the recycled polyester material are still present in the physically regenerated polyester chips, so that the final matte polyester film also contains these components. Furthermore, the various characteristics of the recycled polyester material itself are also retained in the physically regenerated polyester chips.

Since the molecular weight of the recycled polyester material in the physical regenerating process is not changed significantly, the recycled polyester material has a relatively high viscosity in a molten state and has worse flow properties. Accordingly, if a screen with an insufficient mesh diameter is used, the issue of poor filter efficiency readily occurs.

In order to achieve a better filtering effect, in the present embodiment, the mesh diameter of the first screen is preferably between 10 microns and 100 microns. In other words, the first screen may screen out solid impurities with a particle size larger than the mesh diameter, but the disclosure is not limited thereto.

It is worth noting that there are different suitable intrinsic viscosity ranges for different film-making processes. In general, the physically regenerated polyester chips (physically regenerated polyester resin) obtained by physical regeneration have a higher intrinsic viscosity (not less than 0.60 dL/g). If only the physically regenerated polyester chips (physically regenerated polyester resin) are used, the polyester masterbatch material is only suitable for bottle blowing and spinning processes, not for film extrusion processes.

To adjust the intrinsic viscosity of the physically regenerated polyester chips may be used solid-state polymerization. However, the solid-state polymerization method may only be used to increase the intrinsic viscosity of the physically regenerated polyester chips, and may not be used to reduce the intrinsic viscosity of the physically regenerated polyester chips.

In order to solve the above issue, in the disclosure, chemically regenerated polyester chips (chemically regenerated polyester resin) are prepared by a chemical regenerating step in step S130 with a less intrinsic viscosity (not greater than 0.65 dL/g). As a result, by using both the physically regenerated polyester chips and the chemically regenerated polyester chips at the same time, and adjusting the proportion of physically and chemically regenerated polyester chips, the effect of adjusting the intrinsic viscosity of the polyester masterbatch material may be achieved, so that the polyester masterbatch material may be suitable for a film extrusion process.

Step S130 includes: chemically regenerating another part of the recycled polyester to obtain chemically regenerated polyester chips. The chemically regenerated polyester chips have a second intrinsic viscosity, and the second intrinsic viscosity of the chemically regenerated polyester chips is less than the first intrinsic viscosity of the physically regenerated polyester chips. In the present embodiment, the second intrinsic viscosity of the chemically regenerated polyester chips is generally not more than 0.65 dL/g. Preferably, the second intrinsic viscosity is 0.40 dL/g to 0.65 dL/g. More preferably, the second intrinsic viscosity is 0.50 dL/g to 0.65 dL/g.

Specifically, the manufacturing steps of the chemically regenerated polyester chips include: cutting or pulverizing another part of the recycled polyester material (such as r-PET bottle flakes) to reduce the time and energy consumption required to depolymerize the recycled polyester material. Then, the cut or pulverized regenerated polyester material is put into a chemical depolymerization solution to depolymerize the regenerated polyester material so as to form a masterbatch material mixture. Next, a second screen is used to filter the masterbatch material mixture to remove solid impurities in the recycled polyester material, thereby reducing the concentration of non-polyester impurities in the masterbatch material mixture.

Next, the masterbatch material mixture filtered by the second screen is subjected to an esterification reaction, and an inorganic additive or a copolymer monomer is added during the esterification reaction. Lastly, under specific reaction conditions, the monomers and/or oligomers in the masterbatch material mixture are re-polymerized and pelletized to obtain the chemically regenerated polyester chips. In particular, the liquid temperature of the chemical depolymerization solution may be, for example, between 160 °C and 250 °C, but the disclosure is not limited thereto. Furthermore, the mesh diameter of the second screen is less than the mesh diameter of the first screen.

It should be mentioned that, the chemical depolymerization solution may cause chain scission to the polyester molecules in the recycled polyester material, so as to achieve the effect of depolymerization, and a polyester composition with shorter molecular chain and an ester monomer composed of one diacid unit and two diol units may be further obtained, such as bis(2-hydroxyethyl) terephthalate (BHET). That is, the molecular weight of the masterbatch material mixture is less than the molecular weight of the recycled polyester material.

In the present embodiment, the chemical depolymerization solution may be, for example, a solution of water, methanol, ethanol, ethylene glycol, diethylene glycol, or a combination thereof, but the disclosure is not limited thereto. For example, water is used for hydrolysis, and methanol, ethanol, ethylene glycol, or diethylene glycol is used for alcoholysis.

Moreover, it should be mentioned that, different from the physical regenerating step, the chemical regenerating step involves "depolymerization and repolymerization of polyester molecules in the recycled polyester material" to depolymerize the polyester molecules into molecules with smaller molecular weight and further repolymerize the molecules into a new polyester resin.

In other embodiments of the disclosure, the method for preparing the chemically regenerated polyester chips is not limited to those described in the above embodiments, and the chemically regenerated polyester chips may also be prepared by hydrolysis or supercritical fluid methods. The hydrolysis method is performed with the recycled polyester material in an alkaline solution, wherein by adjusting a certain temperature and pressure, and under the irradiation of microwave radiation, the polyester molecules are completely decomposed into monomers. The supercritical fluid method is to decompose the recycled polyester material into a small amount of monomers and oligomers in supercritical fluid methanol. In particular, the yield of monomers and oligomers is affected by the reaction temperature and reaction time.

Furthermore, due to the chemical recycling method, the recycled polyester material may be depolymerized into monomers with small molecular weight. Therefore, the impurities (such as colloidal impurities or other non-polyester impurities) originally present in the recycled polyester material (such as r-PET bottle flakes) may be more readily excluded by filtering compared to physical recycling methods.

Moreover, because the chemical regenerating operation may reduce the molecular weight of the recycled polyester material (such as forming polyester compositions and compound monomers with shorter molecular chains), the recycled polyester material has a less viscosity after being depolymerized, and the flow properties thereof are better. Accordingly, the chemical regenerating operation may adopt a screen with a smaller mesh diameter to eliminate impurities with a smaller particle size in the polyester material.

In order to achieve a better filtering effect, in the present embodiment, the mesh diameter of the second screen is preferably between 1 micron and 10 microns. In other words, the second screen may screen out solid impurities with a particle size larger than the mesh diameter, but the disclosure is not limited thereto.

In terms of filtering solid impurities, the physical regenerating step may only filter and recycle solid impurities with a larger particle size in the polyester material, and the chemical regenerating step may filter and recycle solid impurities with a smaller particle size in the polyester material. Thereby, the production quality of the matte polyester film may be effectively improved.

Furthermore, the chemically regenerated polyester chips produced by the chemical regenerating step generally have a less intrinsic viscosity. Moreover, the intrinsic viscosity of the chemically regenerated polyester chips is easier to control, and the intrinsic viscosity of the chemically regenerated polyester chips may be adjusted to be less than the intrinsic viscosity of the physically regenerated polyester chips.

Step S140 includes: mixing matte regenerated polyester chips, the physically regenerated polyester chips, and the chemically regenerated polyester chips according to a predetermined intrinsic viscosity so as to form a polyester masterbatch material.

In this way, the intrinsic viscosity of the polyester masterbatch material is suitable for a film-making process. Specifically, the intrinsic viscosity of the polyester masterbatch material is 0.50 dL/g to 0.8 dL/g. Preferably, the intrinsic viscosity of the polyester masterbatch material is 0.50 dL/g to 0.60 dL/g. Furthermore, the final matte polyester film has the predetermined intrinsic viscosity, which is 0.50 dL/g to 0.75 dL/g. Preferably, the predetermined intrinsic viscosity is 0.50 dL/g to 0.60 dL/g.

More specifically, the matte regenerated polyester chips, the physically regenerated polyester chips, and the chemically regenerated polyester chips are mixed with each other in a predetermined weight ratio according to the predetermined intrinsic viscosity. Accordingly, the mixed matte regenerated polyester chips, physically regenerated polyester chips, and chemically regenerated polyester chips may have an intrinsic viscosity suitable for a film-making process.

The matte regenerated polyester masterbatch material includes a matte additive, and the matte additive is at least one material selected from the group consisting of silica particles, calcium carbonate particles, alumina particles, and talc particles. In particular, the particle size of the matte additive is between 0.1 µm and 10 µm. Moreover, based on a total weight of 100 weight percent of the matte polyester film, the content of the matte additive is 0.1 weight percent to 20 weight percent.

The matte regenerated polyester chips may be prepared by a physical regenerating step or a chemical regenerating step. In other words, the matte regenerated polyester chips include at least one of the physically matte regenerated polyester chips and the chemically matte regenerated polyester chips.

Specifically, the method for manufacturing the physically matte regenerated polyester chips includes melting a part of the recycled polyester material to obtain a first molten mixture. A matte additive is added to the first molten mixture to form a second molten mixture. The second molten mixture is reshaped to obtain the physically matte regenerated polyester chips. It should be mentioned that, in an embodiment of the disclosure, the first molten mixture may, for example, be filtered through the first screen first, and then the matte additive is added to form the second molten mixture. Moreover, since the physically matte regenerated polyester chips are added with the matte additive, the intrinsic viscosity of the physically matte regenerated polyester chips is reduced. In an embodiment of the disclosure, the intrinsic viscosity of the physically matte regenerated polyester chips is between 0.58 dL/g and 0.72 dL/g.

Specifically, the method for manufacturing the chemically matte regenerated polyester chips includes: depolymerizing another part of the recycled polyester material to obtain a first oligomer mixture. A matte additive is added to the first oligomer mixture to form a second oligomer mixture. The second oligomer mixture is repolymerized to obtain the chemically matte regenerated polyester chips. It should be mentioned that, in an embodiment of the disclosure, the first oligomer mixture may, for example, be filtered through the second screen first, and then the matte additive is added to form the second oligomer mixture. Moreover, since the chemically matte regenerated polyester chips are added with the matte additive, the intrinsic viscosity thereof is reduced. In an embodiment of the disclosure, the intrinsic viscosity of the chemically matte regenerated polyester chips is between 0.45 dL/g and 0.58 dL/g.

In order to increase the proportion of the recycled polyester material, the various regenerated polyester chips all have a suitable usage range.

In terms of the predetermined weight ratio, based on an amount of 100 parts by weight of the polyester masterbatch material (that is, all polyester chips), the amount of the physically regenerated polyester chips is preferably 50 parts by weight to 95 parts by weight, more preferably 60 parts by weight to 80 parts by weight. The amount of the chemically regenerated polyester chips is between 5 parts by weight and 50 parts by weight, preferably between 20 parts by weight and 40 parts by weight, but the disclosure is not limited thereto.

In a preferred embodiment, the amount of the physically regenerated polyester chips is higher than the amount of the chemically regenerated polyester chips, but the disclosure is not limited thereto.

Step S150 includes: melting and then extruding the polyester masterbatch material to form a matte polyester film. In particular, the matte polyester film has a predetermined intrinsic viscosity.

In the matte polyester film, the physically regenerated polyester chips (including the physically matte regenerated polyester chips) form a physically regenerated polyester resin, and the chemically regenerated polyester chips (including the chemically matte regenerated polyester chips) form a chemically regenerated polyester resin. In addition, the matte additive in the matte regenerated polyester chips is evenly dispersed in the physically regenerated polyester resin and the chemically regenerated polyester resin.

According to the mixing ratio in step S140, based on a total weight of 100 wt% of the matte polyester film, the content of the physically regenerated polyester resin is preferably 50 wt% to 95 wt%, and more preferably 60 wt% to 80 wt%. The content of the chemically regenerated polyester resin is preferably 5 wt% to 50 wt%, and is more preferably 20 wt% to 40 wt%. The content of the matte additive is 0.1 wt% to 20 wt%.

Moreover, the total content of the physically regenerated polyester resin and the chemically regenerated polyester resin is 55 wt% to 100 wt%, and the total content is more preferably 70 wt% to 100 wt%.

According to the above configuration, the method for manufacturing the matte polyester film of the present embodiment may be performed by using a high proportion of the recycled polyester material without the addition of a virgin polyester resin, or only a small amount of the virgin polyester resin needs to be added. For example, in an embodiment of the disclosure, the amount of the virgin polyester resin is usually not more than 50 parts by weight, preferably, the virgin polyester resin is not more than 30 parts by weight, and more preferably, the virgin polyester resin is not more than 10 parts by weight.

In an embodiment of the disclosure, the physically regenerated polyester chips have a first acid value, the chemically regenerated polyester chips have a second acid value, and the second acid value is greater than the first acid value. In particular, the first acid value is between 10 mgKOH/g and 40 mgKOH/g, and the second acid value is between 20 mgKOH/g and 70 mgKOH/g.

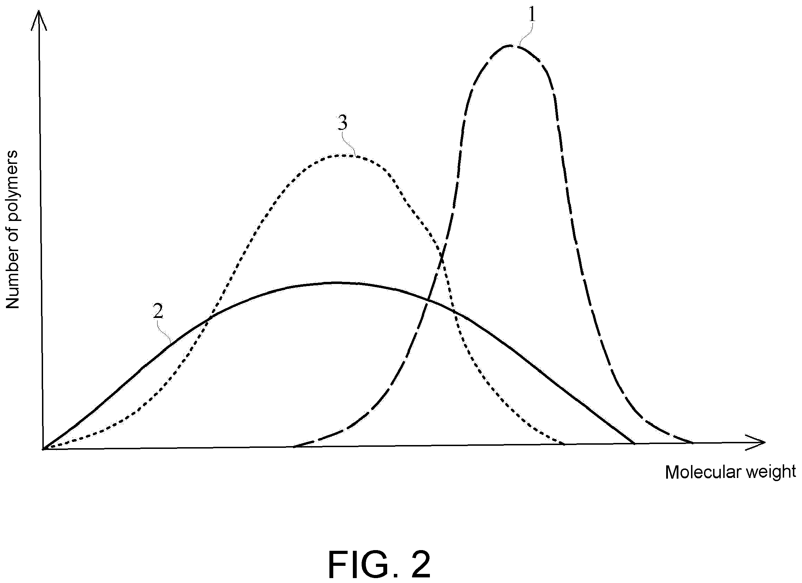

More specifically, referring to FIG. 2, the physically regenerated polyester chips have a first molecular weight distribution 1, the chemically regenerated polyester chips have a second molecular weight distribution 2, and the distribution range of the second molecular weight distribution 2 is wider than the distribution range of the first molecular weight distribution 1.

Moreover, by mixing the physically regenerated polyester chips and the chemically regenerated polyester chips, the polyester masterbatch material (matte regenerated polyester chips, physically regenerated polyester chips, and chemically regenerated polyester chips) have a third molecular weight distribution 3, and the distribution range of the third molecular weight distribution 3 is between the first molecular weight distribution 1 and the second molecular weight distribution 2.

More specifically, in terms of molecular weight distribution, the molecular weight distribution of the chemically regenerated polyester chips is wider, which may contribute to the productivity of the film-making process, but the physical properties (such as: mechanical properties) of a matte polyester film produced only using the chemically regenerated polyester chips are worse. Furthermore, the production cost of the chemically regenerated polyester chips is higher.

The molecular weight distribution of the physically regenerated polyester chips is narrower, which is not good for the productivity of the film-making process, but a matte polyester film with stronger mechanical properties may be produced, with better physical properties. In other words, completely using physical recycling or chemical recycling is not ideal.

The characteristic of the method for manufacturing a matte polyester film of an embodiment of the disclosure is that the use of the physically regenerated polyester chips and the chemically regenerated polyester chips at the same time may improve the productivity of the film-making process, improve the physical properties of the matte polyester film, and reduce the production cost of the matte polyester film.

### [Matte polyester film]

The above is the method for manufacturing a matte polyester film of an embodiment of the disclosure, and the following describes the matte polyester film of an embodiment of the disclosure. In the present embodiment, the matte polyester film is formed by the above manufacturing method, but the disclosure is not limited thereto.

The material of the matte polyester film includes a physically regenerated polyester resin, a chemically regenerated polyester resin, and a matte additive. The physically regenerated polyester resin is formed from physically regenerated polyester chips, and the physically regenerated polyester chips have a first intrinsic viscosity. The chemically regenerated polyester resin is formed from chemically regenerated polyester chips, the chemically regenerated polyester chips have a second intrinsic viscosity, and the second intrinsic viscosity is less than the first intrinsic viscosity. The matte additive is dispersed between the chemically regenerated polyester resin and the physically regenerated polyester resin.

It is worth noting that the physically regenerated polyester chips and the chemically regenerated polyester chips are mixed according to a predetermined intrinsic viscosity as the target, so that the resulting matte polyester film may have the predetermined intrinsic viscosity.

In an embodiment of the disclosure, the first intrinsic viscosity of the physically regenerated polyester chips is not less than 0.60 dL/g, the second intrinsic viscosity of the chemically regenerated polyester chips is not more than 0.65 dL/g, and the predetermined intrinsic viscosity is 0.40 dL/g to 0.75 dL/g.

In a preferred embodiment of the disclosure, the first intrinsic viscosity of the physically regenerated polyester chips is 0.65 dL/g to 0.80 dL/g, the second intrinsic viscosity of the chemically regenerated polyester chips is 0.50 dL/g to 0.65 dL/g, and the matte polyester film has a predetermined intrinsic viscosity between 0.50 dL/g and 0.60 dL/g.

In an embodiment of the disclosure, the matte polyester film has an acid value between 10 mgKOH/g and 80 mgKOH/g, and preferably between 40 mgKOH/g and 70 mgKOH/g.

The method for measuring the acid value range of the matte polyester film is to use a titration method, which is performed with reference to the ASTM D7409-15 standard test method.

When the acid value of the matte polyester film is between 10 mgKOH/g and 80 mgKOH/g, the matte polyester film has the effects of heat resistance and hydrolysis resistance under the condition of low acid value.

It is also worth mentioning that the plurality of physically regenerated polyester chips and the plurality of chemically regenerated polyester chips are all obtained by recycling the recycled polyester material and pelletizing the recycled polyester material. In particular, the recycled polyester material is r-PET bottle flakes.

According to the above configuration, the matte polyester film meets the following conditions: (i) based on a total weight of 100 mol% of the matte polyester film, the content of isophthalic acid in the matte polyester film is between 0.7 mol% and 4.0 mol%; (ii) based on a total weight of 100 wt% of the matte polyester film, the content of biomass-derived ethylene glycol in the matte polyester film is not more than 5 wt%; (iii) the haze of the matte polyester film is between 15% and 95%; (iv) the visible light transmittance of the matte polyester film is not less than 60%, and preferably not less than 80%; (v) the surface roughness (Ra) of the matte polyester film is between 100 nm and 400 nm (the surface roughness measurement method is based on DIN EN ISO4287/4288); and (vi) the friction coefficient of the matte polyester film is between 0.2 and 0.6.

The method for measuring the friction coefficient of the matte polyester film is based on ASTM D1894.

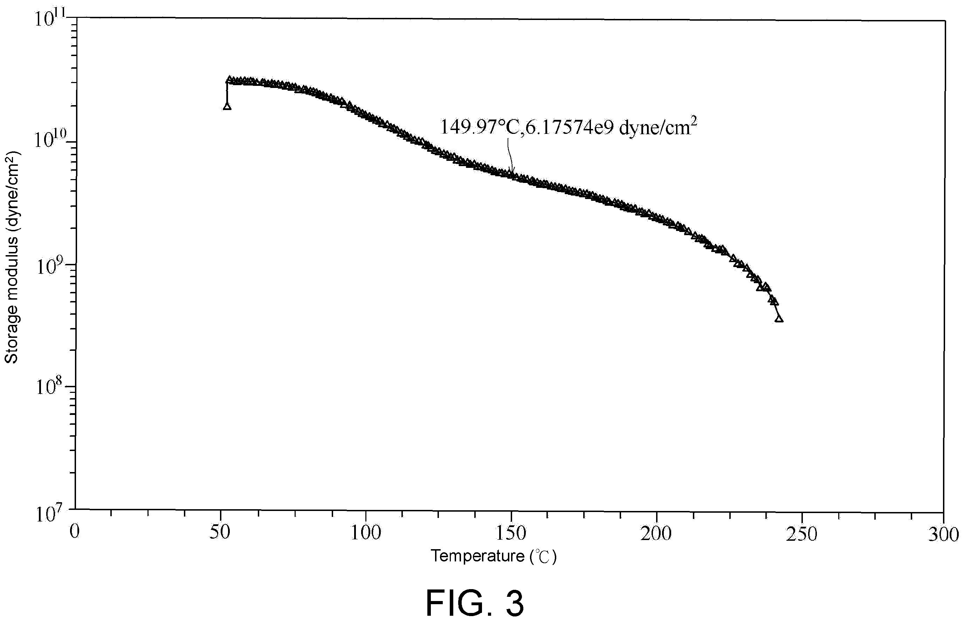

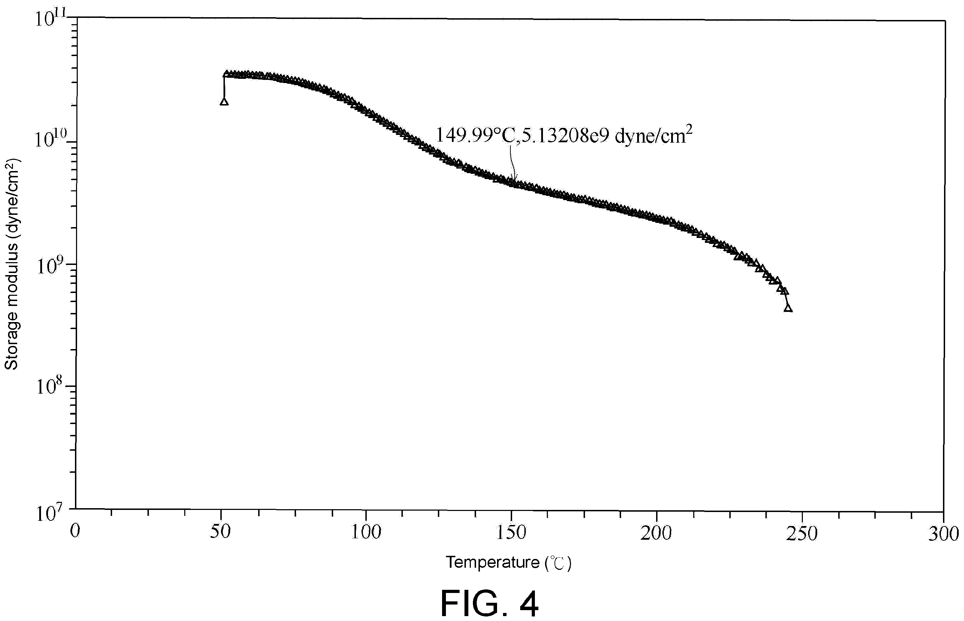

In an embodiment of the disclosure, the storage modulus of the matte polyester film measured at 150±2 °C and 10 Hz is between 4.2×10⁹ dyne/cm² and 6.8×10⁹ dyne/cm², and preferably between 4.2×10⁹ dyne/cm² and 6.6×10⁹ dyne/cm². The storage modulus of the matte polyester film is the average value of the storage modulus of the matte polyester film in the MD direction and the TD direction measured by a dynamic viscoelasticity measuring apparatus. Please refer to FIG. 3 and FIG. 4 for specific measurement results, but the disclosure is not limited thereto.

### [Advantages of the embodiments]

One of the beneficial effects of the disclosure is that for the matte polyester film and the method for manufacturing the same provided by the disclosure, via the technical solution of "mixing matte regenerated polyester chips, the physically regenerated polyester chips, and the chemically regenerated polyester chips according to a predetermined intrinsic viscosity to form a polyester masterbatch material", the polyester masterbatch material may be adjusted to have a predetermined intrinsic viscosity, so as to be suitable for a film extrusion process, and a higher proportion of the recycled polyester masterbatch material is achieved.

The content disclosed above is only the preferred and feasible embodiments of the disclosure, and does not limit the scope of the claims of the disclosure. Therefore, all equivalent technical changes made by using the specification of the disclosure and the content of the figures are all included in the scope of the claims of the disclosure.

## Claims

1. A method for manufacturing a matte polyester film, comprising:
providing a recycled polyester material;
physically regenerating a part of the recycled polyester material to form physically regenerated polyester chips; wherein the physically regenerated polyester chips have a first intrinsic viscosity;
chemically regenerating another part of the recycled polyester material to form chemically regenerated polyester chips; wherein the chemically regenerated polyester chips have a second intrinsic viscosity less than the first intrinsic viscosity;
mixing matte regenerated polyester chips, the physically regenerated polyester chips, and the chemically regenerated polyester chips according to a predetermined intrinsic viscosity so as to form a polyester masterbatch material; and
melting and then extruding the polyester masterbatch material to obtain the matte polyester film; wherein the matte polyester film has the predetermined intrinsic viscosity;
wherein the predetermined intrinsic viscosity of the matte polyester film is between 0.40 dL/g and 0.75 dL/g; the matte polyester film has an acid value between 10 mgKOH/g and 80 mgKOH/g; the matte polyester film has a surface roughness (Ra) between 100 nm and 400 nm; and the matte polyester film has a friction coefficient between 0.2 and 0.6.

2. A matte polyester film, wherein the matte polyester film is formed by mixing, melting, and extruding a physically regenerated polyester resin and a chemically regenerated polyester resin according to a predetermined intrinsic viscosity, so that the matte polyester film has the predetermined intrinsic viscosity;
wherein the predetermined intrinsic viscosity of the matte polyester film is between 0.40 dL/g and 0.75 dL/g; the matte polyester film has an acid value between 10 mgKOH/g and 80 mgKOH/g; the matte polyester film has a surface roughness (Ra) between 100 nm and 400 nm; and the matte polyester film has a friction coefficient between 0.2 and 0.6.

3. The matte polyester film of claim 2, wherein based on a total weight of 100 mol% of the matte polyester film, a content of isophthalic acid in the matte polyester film is between 0.7 mol% and 4.0 mol%; and a storage modulus of the matte polyester film measured at 150±2 °C and 10 Hz is between 4.2×10⁹ dyne/cm² and 6.8×10⁹ dyne/cm².

4. The matte polyester film of claim 2, wherein the matte polyester film has a haze between 15% and 95%, and the matte polyester film has a visible light transmittance not less than 60%.

5. The matte polyester film of claim 2, wherein based on a total weight of 100 wt% of the matte polyester film, a content of biomass-derived ethylene glycol in the matte polyester film is not more than 5 wt%.

6. A matte polyester film, wherein the matte polyester film has a predetermined intrinsic viscosity between 0.40 dL/g and 0.75 dL/g; the matte polyester film has an acid value between 10 mgKOH/g and 80 mgKOH/g; the matte polyester film has a surface roughness (Ra) between 100 nm and 400 nm; and the matte polyester film has a friction coefficient between 0.2 and 0.6.

7. The matte polyester film of claim 6, wherein based on a total weight of 100 mol% of the matte polyester film, a content of isophthalic acid in the matte polyester film is between 0.7 mol% and 4.0 mol%; and a storage modulus of the matte polyester film measured at 150±2 °C and 10 Hz is between 4.2×10⁹ dyne/cm² and 6.8×10⁹ dyne/cm².

8. The matte polyester film of claim 6, wherein the matte polyester film has a haze between 15% and 95%, and the matte polyester film has a visible light transmittance not less than 60%.

9. The matte polyester film of claim 6, wherein based on a total weight of 100 wt% of the matte polyester film, a content of biomass-derived ethylene glycol in the matte polyester film is not more than 5 wt%.
